# EUROPEAN PATENT APPLICATION

(11) **EP 3 275 602 A1**
(43) Date of publication of application: **31.01.2018**
(21) Application number: 16181251.6
(22) Date of filing: 26.07.2016
(51) Int. Cl.: B25J 9/12, B25J 17/02, B25J 19/06, B25J 9/10, F16F 1/32

(54) **JOINT UNIT, JOINT SYSTEM, ROBOT FOR MANIPULATION AND/OR TRANSPORTATION, ROBOTIC EXOSKELETON SYSTEM AND METHOD FOR MANIPULATION AND/OR TRANSPORTATION**

(71) Applicant: ETH Zurich, 8092 Zurich (CH)
(72) Inventor: HUTTER, Marco, 9230 Flawil (CH); BODIE, Karen, 8057 Zürich (CH); LAUBER, Andreas, 8902 Urdorf (CH); HWANGBO, Jemin, 8952 Schlieren (CH)

(57) **Abstract**

The invention relates to a joint unit, in particular a joint unit of a robot, a joint system, a robot for manipulation and/or transportation, in particular for transportation of an object, a robotic exoskeleton system and a method for manipulation and/or transportation, in particular for transportation of an object, in particular for moving a body.

A joint unit (40), in particular a joint unit (40) of a robot, is presented. It comprises in series connection a rotary drive (2), a gear (5), at least one spring element (7) and a joint output (8). The gear (5) comprises a gear input and a gear output, wherein the gear input is mechanically coupled to the rotary drive (2) and suitable for transformation of the torque provided by the rotary drive (2). The spring element (7) is mechanically coupled to the gear output and suitable for at least partial storing of the torque provided by the gear output and/or of the torque provided by an external load applied to the joint unit (40). The joint output (8) is mechanically coupled to the spring element (7) for transmitting the torque realized by the rotary drive (2) and/or stored by the spring element (7).

## Description

The invention relates to a joint unit, in particular a joint unit of a robot, a joint system, a robot for manipulation and/or transportation, in particular for transportation of an object, a robotic exoskeleton system and a method for manipulation and/or transportation, in particular for transportation of an object, in particular for moving a body.

Today, robots are versatile and universally applicable in different fields and environments. From manufacturing processes, facilitating human work, to hostile environments, enabling the exploration of hardly accessible areas, robots have become more and more important. Besides, robots make an entrance into everyday life, for example as personal robots, such as service robots, or rehabilitation devices.

Known robot joints and robots are designed for precise and repetitive operations in predetermined environments. Therefore, a mere position control of a rigid structure is often the basis for their movement.

Especially in applications of dynamic interaction with unstructured or unknown environments, such as human-robot interactions or walking robots, elasticity and force/torque control, respectively, are required. Besides, elasticity is necessary to ensure safety for the operator, the surroundings and the robot itself.

Torque-controlled joint systems are known, for example joints having absolute speed and torque limitations for safety reasons. However, force or torque control is either based upon inaccurate motor current measurement or realized with extensive sensing equipment. Known systems are not able to perform controlled dynamic collision manoeuvres at a reasonable speed.

US 5 650 704 A1 discloses an elastic actuator comprising a motor and a motor drive transmission connected to its output. Furthermore, an elastic element, connected in series, a force transducer and an active feedback force controller are arranged. The output is substantially independent of the load motion.

US 8 443 694 B2 discloses a rotary actuator assembly for actuation of an upper arm assembly for a humanoid robot. It comprises a plurality of generally circular support frames, a plurality of rotary actuators each comprising a motor, a gear drive, a torsion spring and a joint output.

US 2015 0 283 698 A1 discloses an actuator to be used in robots and robotic devices. It comprises two plates, between which an elastic element is disposed. The elastic element is characterized by its edge portion thickness being larger than its center portion thickness, resulting in an approximately equal shear stress associated with the center portion and with the edge portion.

The problem to be solved by the invention is to provide a joint unit, a joint system, a robot for manipulation and/or transportation, a robotic exoskeleton system and a method for manipulation and/or transportation which allow dynamic interaction in an unstructured or unknown environment, e. g. in human-robot interaction, in a compact, safe and easy way.

The problem is solved by the subject matter of the joint unit as claimed in claim 1, as well as by a joint system, a robot for manipulation and/or transportation, a robotic exoskeleton system and a method for manipulation and/or transportation, as claimed in claims 11, 12, 14 and 15 Specific and advantageous embodiments of the joint unit are claimed by the dependent claims 2-10.

According to a first aspect of the invention, a joint unit, in particular a joint unit of a robot, is presented. It comprises in series connection a rotary drive, a gear, at least one spring element and a joint output. The gear comprises a gear input and a gear output, wherein the gear input is mechanically coupled to the rotary drive and suitable for transformation of the torque provided by the rotary drive. The spring element is mechanically coupled to the gear output and suitable for least partial storing of the torque provided by the gear output and/or of the torque provided by an external load applied to the joint unit. The joint output is mechanically coupled to the spring element for transmitting the torque realized by the rotary drive and/or stored by the spring element.

In other words, the rotary drive drives a gear which transforms the rotary motion, particularly to a rotary motion of a different speed and torque. The gear output is connected to an input side of a spring element which is connected with its output side to a joint output. The joint output can be the output of the spring element itself, e.g. a connection area of the spring element. The spring element deforms until its torque matches the reaction moment exerted by the external load, e.g. a part of a robot arm connected to the joint output and possibly an additional static friction torque, and then starts a rotational movement, transmitting the rotational movement to the external load. At very small loads, the deformation may be negligible. External loads are particularly connected or applied to the joint output.

The spring element comprises particularly two connection areas with a deformable part mechanically connected to the connection areas and positioned in between them. One connection area is connected to the gear output and one connection area is connected to the joint output.

The rotary drive comprises a rotor and a stator. It is typically an electric motor, particularly a brushless electric motor.

The joint output may be an axle on which the comprised elements are positioned. Particularly, the other elements such as stator and rotor of the rotary drive and the gear are supported on the axle with bearings. Particularly, the joint output is suitable to be directly connected to external loads such as linking members, tools and/or robot components.

The joint unit may comprise a housing in which the said devices are encapsulated and the motor may comprise an electronic control unit which may also be integrated into the housing.

The spring element enables temporary energy storage and energy release for an efficient operation. Speed amplification is possible, as the additional energy provided by the deformed spring can amplify the peak velocity and power of the joint output, enabling for highly dynamic manoeuvers. Further, the spring element protects the gear by decoupling it from peak loads exerted via the joint output. Therefore the joint unit is impact robust.

In one embodiment of the invention, the gear is a strain wave gear.

A strain wave gear is a lightweight, accurate, virtually backlash-free gear with a high gear ratio. Alternatively, a different type of gear may be used, for example a planetary gear. The gear is particularly to be selected to ensure backlash -free transmission at a low weight.

Particularly, a so-called harmonic drive gear is used. Different gears offer different reduction ratios at the same size, enabling to select the desired gear according to specific tasks without changing further components.

This embodiment enables highly dynamic and kinematic actuation accuracy at a low weight, which is particularly advantageous for mobile and/or fast-moving applications.

In another embodiment, the gear is suitable for a transformation of the torque with a ratio <1 or >1.

Particularly, the torque transformation has a ratio >1, such that the torque is increased and the speed is reduced.

The joint output may be realized as an axle, preferably a hollow axle.

The joint output is a rotation axle which is driven or driveable by the joint output of the spring element. Particularly, the rotary drive comprises a rotor and the gear comprises a rotor, and the rotors of the rotary drive and at least one rotor of the gear are supported on the axle.

The rotary drive, which may be an electrical motor, may be a hollow shaft motor, comprising a hollow rotor which is positioned around the axle. The axle may particularly be a hollow axle.

Particularly, the hollow axle comprises a mechanical mounting interface providing the joint output. The interface is supported by a robust and stiff bearing to be able to sustain high bending moments. This allows for robot designs without additional joint bearings or support structures. Mounting of external loads can be realized by any fastening elements, particularly screws, bolts, dowel pins or the like.

The advantage of the embodiment of a hollow axle is that power and signal cables, the latter e.g. for control and sensor signals, can be guided through the hollow axle, enabling a safe, easy and unlimited serial connection of joint units as specified with only one data cable and one power cable and without any loose or visible cables.

In another embodiment, the rotary drive comprises a stator and the joint unit comprises a connecting element provided on the stator.

The connecting element is particularly positioned on a stator or housing of the rotary drive and/or of the joint unit and is suitable for connecting the stator to an arbitrary structure. The stator or housing itself may represent the connecting element. Particularly, more than one connection element is arranged on more than one side of the housing. For example, hole patterns on the housing and joint output shaft provide a simple interface to connect the joint unit to arbitrary links.

The advantage is that a plurality of joint systems can be mechanically connected in series with or without linking members, without the necessity of additional fasteners, bearings or supporting structures. Linking members may be arbitrarily shaped.

In a certain embodiment, the spring element is a spiral spring.

The spring element is a spring, particularly a flat spiral spring, and typically not a helical spring. It is a bending spring of which the effect is a torque and which is loaded with a torque. It may comprise at least one but particularly more than one strip, particularly metal strip, concentrically wound around one axis. The strip is mechanically connected or connectable to a further functional unit, such as the gear or a joint output, in an inner connection area. In case of two strips, both strips are connected to a central part, comprising the inner connection area, and positioned on opposite sides. Further, notably each strip comprises an outer connection area. However, also an interconnection of the outer connection areas of the strips, in the case of more than one strip, is possible.

The spiral spring may be made of titanium, e.g. a titanium alloy further comprising aluminum and vanadium, such as grade 5 titanium, also known as Ti6Al4V. It can alternatively consist at least partially of spring steel or fibrous composite material, such as carbon-fiber-reinforced polymer. The material is chosen as to provide high elastic energy storage capacity per mass and high durability. It may have a spring constant between 100 Nm/rad and 180 Nm/rad, particularly between 130 Nm/rad and 170 Nm/rad. In one embodiment, it may be between approximately 150 Nm/rad and approximately 165 Nm/rad.

In a further embodiment, the spiral spring comprises at least two wound strips, particularly concentrically, each comprising three sections along the longitudinal direction of the respective strip, wherein a middle section provided between a center section arranged in the center part and a distal section arranged at a distal end has a cross section which is bigger than the cross sections of the center section and the distal section.

The inner connection area is located in the center part of the spiral spring and adjacent to the center section of the strips. The outer connection area is arranged at the distal end of the distal part of each strip.

In other words, the strips have an expansion, a maximum and a subsequent reduction in their cross sections with the length of the strip. The cross section is measured perpendicular to the longitudinal direction of the respective strip.

Particularly, the strips have an essentially consistent width and their thicknesses vary with length. Width in this case relates to an extension in the direction along or parallel to the winding axis.

The spiral spring input may be arranged either in the inner or in the outer connection area of the spring, depending on the desired properties. Obviously, the spring output is arranged in the opposing connection area. For example, a high peak torque may be better absorbed if the spring output, which is suitable to be deformed by applied external loads, is located in the outer connection area. The inner and outer area connection interfaces are suitable to attach adjoining components, e.g. by screws, bolts, dowel pins or the like, for a reliable load transmission. The inner connection area of the spring particularly leaves sufficient space around the central winding axis for the hollow axle.

The strips may be wound by 180° to 720°, particularly by 270° to 630°. In one embodiment, they may be wound by approximately 360° to approximately 540°. Depending on the application of the joint unit, the spring width may be varied to adjust a desired spring constant. The thickness of each strip may vary between 1 mm and 15 mm, particularly between 2 mm and 10 mm. In one embodiment, the thickness varies between approximately 2 mm and approximately 5 mm inside, between approximately 4 mm and approximately 9 mm at the peak and between approximately 2 mm and approximately 5 mm outside. The width may be constant between 2 mm and 100 mm, in particular between 5 mm and 20 mm. In one embodiment, it may be between approximately 8 mm and approximately 12 mm. In case of more than two strips or a higher winding angle, the thickness and/or the width may be reduced accordingly. In the opposite case, it may be increased.

The spring may be pivoted on the joint unit output axle.

The advantage of the described spring design is an equal surface stress distribution and therefore an optimal material usage at a minimum weight. This kind of spring is low-damping and suitable to work in both rotational directions. A backlash-free connection to its output is possible. The high mechanical elasticity allows for a small output impedance and, in combination with a torque control, a high torque resolution.

In a further embodiment, the joint unit comprises a joint output angle sensing device.

The joint output angle sensing device is particularly an absolute angular sensor and in one embodiment a high-resolution sensor. It may be part of an electronic control unit, which is enabled to precisely control and measure the joint output position and/or velocity. It may be positioned at the joint output axle or at the output of the spring element. Absolute encoders do not require a homing procedure when the device starts. A high encoder resolution is permitting precise and accurate measurement. This embodiment enables precise sensing, control, and dynamic actuation of the joint output position and velocity.

The rotary drive may comprise a rotor and a position sensing device adapted to sense the angular position of the rotor. The sensing device may be a hall sensor for commutation of the rotor o the rotary drive which is preferably a motor.

For more accurate control, a second sensing device or encoder may be provided on the output of the rotor and/ or the input of the gear.

The rotor of the rotary drive is particularly realized as a hollow axle that may be rotatably supported on the joint output axle. The position sensing device is particularly a hall sensor. It may be suitable to determine rotor position and velocity and is also referred to as motor position sensor.

The motor position sensor is particularly connected or connectable to an electronic control unit. It may also be positioned on the gear input.

In combination with the joint output angle sensing device and with knowledge of the gear transmission, the spring deformation, particularly the spring deflection angle, can be calculated.

In one embodiment, the joint unit comprises a gear output angle sensing device.

The gear output angle sensing device is particularly an absolute rotary encoder. Combined with information of the joint output angle sensing device, the spring deformation, particularly the spring deflection angle, can be calculated. With knowledge of the spring constant, the applied torque can be determined. This makes torque control possible. In this embodiment, the joint unit is controllable by position, force or torque, respectively. The torque control takes into account the whole drive train and is therefore reliable and less prone to inaccuracies. The gear output angle sensing device may also be positioned on the spring element input.

Alternatively, the spring deformation may be calculated with a different sensor.

If the joint unit comprises a motor position sensor, particularly a hall sensor, the gear output angle sensing device may be used to calibrate said sensor.

This embodiment enables safe human-robot interaction. Collaborative tasks of a human and a robot can be performed in which the robot can carry out all easy and repetitive working procedures and the human performs the more complex steps, as for example during assembly processes in electrical engineering. Furthermore, the robot may support human activity in all cases where two hands are not sufficient. An alternative application may be legged robots.

In another embodiment, the joint unit comprises a housing and the rotary drive, the gear and the spring element are at least partly positioned inside the housing.

Particularly, the rotary drive, the gear and the spring element are entirely positioned inside the housing.

The housing, which is part of the stator of the rotary drive, may comprise a connecting element for mechanical attaching of the joint unit to e.g. robot base or a linking member.

High tensile aluminum alloys used for all structural parts, high-quality drive components and tight packaging of the components grant the joint unit high power and torque density, making it suitable for dynamic robot applications.

The housing makes the joint unit compact and versatile and enables it to be used directly as an actuated robotic joint.

In one embodiment, the housing of the joint unit is sealed with sealing rings.

The housing is particularly sealed against liquid and/or particle ingress. Sealing may be according to a standardized international protection classification, IP, for example IP67.

This embodiment has the advantage that the joint unit or any device comprising the joint unit is applicable in harsh environments.

In another embodiment, the joint unit comprises a slip ring for the transmission of electrical signals and/or power between members of the joint unit that are movable with respect to each other.

Particularly, electrical signals and/or power can be transmitted between stator or housing and rotor or joint output. Besides, electrical signals and/or power may be transmitted between one of the mentioned units and the motor output, gear input, gear output or spring element input.

The slip ring is particularly integrated in the hollow axle. This allows for a continuously rotating joint output with the possibility to transmit power and/or control signals to any device connected to the output of the joint unit.

In a further embodiment, the joint comprises a control unit, particularly positioned inside the housing.

Particularly, an electronic control unit is used. It may be suitable to control speed, torque and movement angles of the rotary drive by processing input data, such as data originating from sensing devices or manually entered data. Position sensors and hall sensors may for example act as input for the control unit. Control processes can be open-loop and/or closed-loop control processes.

The control unit is particularly fully integrated into the housing such that no additional electronic components are necessary for operation of the joint unit. For cooling purposes, it may be mounted on the same housing part as the stator.

The control unit may particularly be integrated into the motor, comprising a hardware part with sensors, such as hall and/or temperature sensors, a central processing unit, CPU, comprising a microprocessor, power stages supplying the motor with electric current and communication interfaces for the spring and position sensors. It may further comprise light emitting diodes, LEDs, a communication interface, such as a controller area network bus, CAN-bus, and/or a debug port. The status LED may provide information on the CPU status, the communication status and/or other information. The debug port is particularly accessible from externally and suitable for custom programming of the control unit. The control unit may comprise further sensing devices, such as temperature sensors.

This embodiment of the invention has the advantage that the joint unit is compact, autonomous and fully integrated, so it can be universally used in a diverse range of applications. It is rugged, lightweight and scalable with on-board intelligence. It possesses a great actuation performance for robots in dynamic contact interaction with the environment. It is an adaptive, simple and cost-efficient solution. The easy to integrate joint unit can rapidly speed up the development time of any new robot application or enhance current technology with reliable control and safety performance.

The rotary drive is connected to a 48V DC power line and a communication bus. It is possible to program the control unit for user-specific applications in a predefined software environment. The control unit has a high control bandwidth, enabling fast tracking of control signals as well as sophisticated and fast sensor signal processing, permitting accurate torque control with a resolution of 0.01 Nm for very smooth interaction.

The presented joint unit can be directly used in any kind of robotic design. The rotary drive and other functional units are protected with sealing rings against ingress for operation in harsh environment. The joint output, realized as hollow axle, comprises a slip ring enabling serial robot designs with continuous rotation capability. Accurate position, velocity and torque controllable motion is achieved due to a backlash-free gear and high-precision components. With the design of the spring element, realized as a torsional spiral spring made from titanium alloy Ti6Al4V, the joint unit features inherent safety compared to industrial joint units as well as easy to estimate torque values. As a fully integrated solution, it can decrease drastically the development and production cost of systems that integrate motor, gear and potentially elastic elements as a safety measure for the user or the unit. With its direct link connection with mechanical, power, and data interface for serial manipulators, the possible designs become simpler, cheaper and time to market can be decreased significantly.

Another aspect of the invention is a joint system, comprising at least two joint units according to the invention, wherein the joint units are mechanically connected in series.

Particularly, the driven hollow joint axle of a first joint unit is mechanically connected to the stator or housing of a second joint unit. Between the hollow joint axle of the first joint unit and the stator of the second joint unit, an arbitrary-shaped link may be positioned. The joint units may be positioned with an arbitrary angle between the axles, enabling the joint system to perform three-dimensional movement.

The joint system may comprise further links and/or further joint units, so each kind of robot, e.g. a walking robot particularly comprising four joint systems, a versatile robot arm or wheeled or tracked vehicles may be constructed.

Another aspect of the invention is a robot for manipulation and/or transportation, in particular for transportation of an object, comprising at least one joint unit according to the invention or at least one joint system according to the invention.

One application is a robot arm. Several joint units are used as joints in a series kinematic chain of linking members, forming a robot arm. The housing connection interface is attached to a static base or to a link of the robot and a subsequent link or end-effector is directly mounted on the connection element of the device. Due to the elastic nature and force/torque sensing capability of the device, such robot arms are predestined for tasks involving humans due to their inherent safety. Furthermore, it is possible to perform tasks with a force controlled approach instead of the classic position control.

An extended application of the robot arm is a walking robot, forming a mobile platform. The robot may comprise a plurality of robot arms, e.g. acting as legs, and be suitable to move, e.g. to walk. A number of robot arms, e.g. four for a mammal-like system, with several links in an arbitrary but reasonable configuration, is attached to a base, acting as legs. End-effectors, e.g. comprising force sensors, are used as feet for the robot to interact with the ground. A computer is controlling all legs simultaneously to make the robot capable of moving without external interaction.

Force control of the legs is essential for controlling such a robot to perform dynamic motions like running or static tasks like balancing. Using the joint unit according to the invention in such a robot fulfills these performance requirements.

A special embodiment of the robot is a driving robot which comprises at least one wheel and at least one joint unit or at least one joint system connected or connectable to the wheel in order to drive the wheel.

That is, another application of the robot is a mobile platform, such as a driving robot or a vehicle, particularly a remote-controlled vehicle such as a remote-controlled car. The joint output can be connected or connectable to a wheel, enabling slip regulation and/or torque vectoring. More than one wheel of a robot, particularly three to eight wheels, may be driven by a joint unit according to the invention. In this case, not only the speed of each wheel can be controlled individually, but also the applied torque.

Slip regulation has the advantage that a robot, e.g. a vehicle, can actively compensate any torque and speed variation implied by friction differences on a ground with varying friction, such as rock on one side and sand on the other. With slip regulation, the robot, e.g. a planetary rover on Mars, can negotiate steps more easily. For example, the front wheels are controlled with low torque while the back wheels push harder leading to a manoeuver where the robot can drive up a step without slipping. Torque vectoring, e.g. in turns, has the advantage that torque can be regulated such that the resulting thrust vector on a mobile robot is forcing the vehicle in the desired direction, e.g. by applying a higher torque outside to decrease the turning radius.

Another aspect of the invention is a robotic exoskeleton system, comprising a joint unit according to the invention and two fixing devices for the fixation on body parts of mammals, particularly humans, wherein the first fixing device is mechanically connected or connectable to the stator of the rotary drive and the second fixing device is mechanically connected or connectable to the rotor of the rotary drive.

Particularly, the fixing devices are adapted for fixation on extremities such as legs or arms, or on a torso. Between the joint unit and the fixing devices, links may be positioned that are particularly adapted to the shape and size of the part of the body of the mammal, particularly the human, to which the robotic exoskeleton system is to be applied. For example, the first fixing device is adapted to be fixed on a human leg below the knee and the second fixing device is adapted to be fixed on a human leg above the knee. The fixing devices may e.g. comprise a hook and loop fastener. The joint unit can support the movement of the knee and help train the movement.

Another aspect of the invention is a training method for a mammal, particularly a human, wherein a robotic exoskeleton system according to the invention is provided. One of the first and second fixing devices is fixed on a first body part of the mammal, on a distal side of a joint of the mammal. Another of the first and second fixing devices is fixed on a second body part of the mammal, on a proximal side of the joint of the mammal. Energy is supplied to the rotary drive. A relative movement of both the joint of the mammal and the joint unit of the robotic exoskeleton system is performed.

For example, the first fixing device is fixed on a thigh and the second fixing device is fixed on the respective lower leg. In this configuration, the knee can be trained. The same is possible for a cubital joint, where the fixing devices are fixed on the upper arm and the forearm, respectively. Another example would be a training of the hip, where the first fixing device is fixed on a thigh and the second fixing device is fixed on the torso, e.g. on the pelvis.

While training, the robotic exoskeleton system may support the movement of the mammal by exerting a force acting in the direction of the movement. This can relieve joint and muscles and may be used for rehabilitation purposes, for example in order to re-learn how to walk after a stroke. In this case, the force exerted by the joint unit of the robotic exoskeleton system can typically be decreased over time.

Alternatively, the robotic exoskeleton system may apply a force counteracting to the force exerted by the mammal. This may be used to train muscles.

Another aspect of the invention is a method for manipulation and/or transportation, in particular for transportation of an object, in particular for moving a body, wherein at least one joint unit according to the invention, a joint system according to the invention and/or a robot according to the invention is provided. Energy is supplied to the rotary drive. Torque provided by the rotary drive is transformed by the gear. The spring element is deformed by the torque provided by the gear. Torque provided by the spring element is transmitted to the joint output and torque provided by the joint output is applied to the object.

The presented method for manipulation and/or transportation may be used for movement, e.g. walking, by an autonomous robot.

It may further be used by e.g. an industrial robot performing a process step in an arbitrary manufacturing process. Particularly, an arbitrary tool or actuator is attached directly or indirectly to the output of a joint unit. This tool or actuator is preferably adapted for performing the process step. It is manipulated with the method according to the invention to perform the desired step. Also the mere positioning or holding of an object may be performed. The presented method can be used in any possible process step, e.g. a mounting or dismounting step, a positioning or fixation step, a moving or transportation step and more.

The invention is not limited to the alternatives described herein. Furthermore, all described embodiments and alternatives of the invention may be combined.

The invention is further illustrated and characterized by the following figures that show a certain example from which further embodiments and advantages can be drawn. These figures are meant to illustrate the invention but not to limit its scope.
Figure 1 shows a cross section of a joint unit according to the invention,
Figure 2 shows a schematic section of a part of a joint unit according to the invention,
Figure 3 shows a top view and a perspective view of a spiral spring according to the invention,
Figure 4 shows a top view, a cross section and two perspective views of the back of the housing of the joint unit according to the invention,
Figure 5 shows two perspective views of a joint unit according to the invention,
Figure 6 shows a side view of a joint unit according to the invention with the housing displayed transparently.

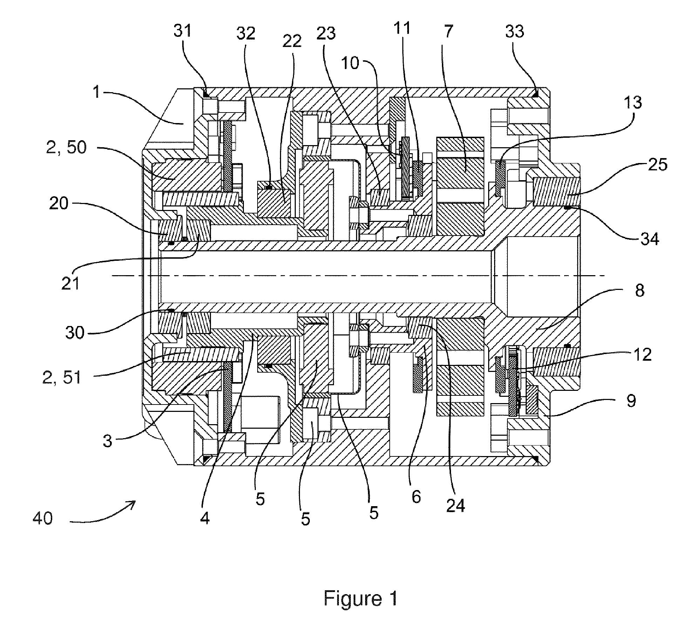

Figure 1 shows a cross section of a joint unit 40 according to the invention. The joint output 8 is realized as a lightweight hollow axle on which the rotary drive 2, realized as brushless electric motor with high power density and low inertia, the gear 5, realized as strain wave gear, e.g. harmonic drive gear, and the spring element 7, realized as spiral spring, are arranged. The stator 50 of the rotary drive 2, namely of the motor, is mounted directly to the back of the housing 1 which employs cooling fins for increased convective heat dissipation (not shown here). Its rotor 51 is connected to the motor-gear transmission shaft 4 which drives the gear 5. The motor-gear transmission shaft 4 is a pivoted axle being supported on the joint output 8 by a bearing 21 and supported on the housing 1 by another bearing 22. The housing 1 surrounds and encapsulates all functional units.

The control unit 3, comprising a motor output position sensing device, is arranged close to the rotary drive 2 and positioned and functionally included in its stator 50. The gear 5 transforms the torque with a ratio >1, so the speed is significantly reduced while the torque is significantly increased. The gear-spring transmission shaft 6, a hollow shaft, is supported with a bearing 24 from the joint output 8 and transmits the transformed rotational movement to the spring element 7, which drives the joint output 8. The joint output 8 is supported on the housing 1 with bearings 20 and 25 and sealed with sealing rings 30 and 34. The housing 1 is subdivided onto a rear part, shown on the left hand side, a central part which is essentially cylindrical and a front part, shown on the right hand side, referred to as connection element 9. The central part of the housing 1 is sealed with sealing rings 31 and 33 from the rear and front parts.

The gear output angle sensing device 100 (shown by its components as follows) comprises a reading head 10, attached to the housing 1, and a magnetic ring 11, attached to the rotating gear-spring transmission shaft 6. Similarly, the joint output angle sensing device 110 comprises a reading head 12, attached to the housing 1, and a magnetic ring 13, attached to the joint output 8.

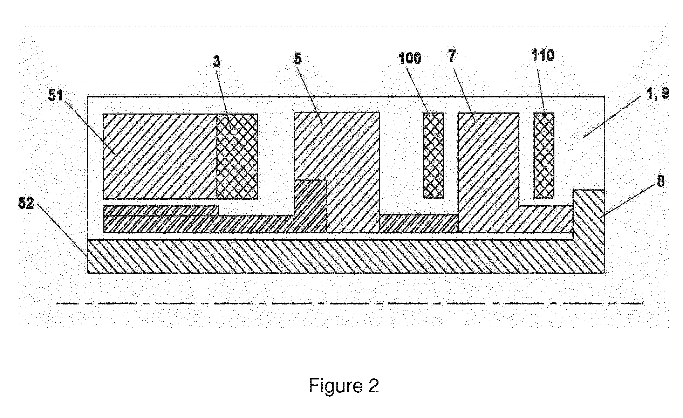

Figure 2 shows a schematic section of bisected joint unit 40 according to the invention in a simplified representation. The rotary drive 2 comprises a stator 50 and a rotor 51. It is controlled by the control unit 3 and drives the gear 5 which transforms the movement. The gear output is connected to the spring element 7 which protects the gear 5 by decoupling it from peak loads exerted via the joint output 8, realized as hollow axle. All described elements are arranged around the hollow axle.

A gear output angle sensing device 100 and a joint output angle sensing device 110 sense the positions of said elements and act as data input for the control unit 3.

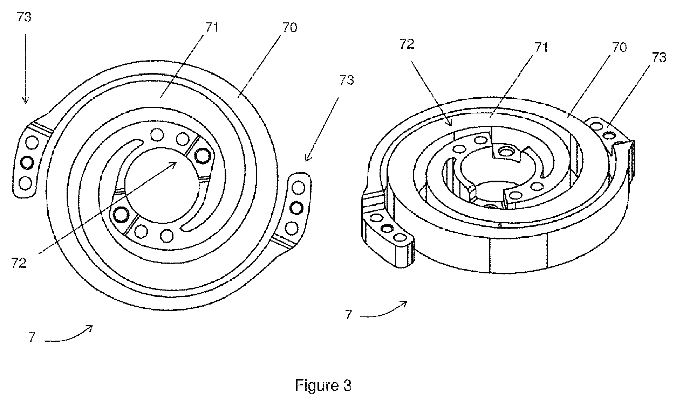

Figure 3 shows a top view and a perspective view of a spring element 7, namely a spiral spring, according to the invention. It comprises a first strip 70 and a second strip 71, which are concentrically wound in form of spirals, respectively, around a central axis. The strips are interconnected forming an inner connection area 72 for a pivoted element to be connected, realized as holes. The inner connection area 72 of the spring particularly leaves sufficient space around the central winding axis for the hollow axle. Besides, each strip 70, 71 comprises an outer connection area 73, realized as holes.

Each strip 70, 71 has a cross section with an expansion and a subsequent reduction with the length of the strip 70, 71. In other words, the strips 70, 71 each have a maximum cross section between two sections with a smaller cross section in front of and behind the described maximum. The cross sections near the inner connection area 72 and near the outer connection area 73 is smaller than the cross section in between said areas. While the width remains constant, the thickness of the strips 71, 72 varies with length.

In this specific embodiment, the thickness of the spring varies from approximately 3.3 mm near the inner connection area 72 to approximately 6.5 mm at the peak to approximately 2.7 mm near the outer connection area 73. The width is constant at 10 mm. The spring constant is approximately 160 Nm/rad. The two strips 70, 71 are wound by approximately 450°.

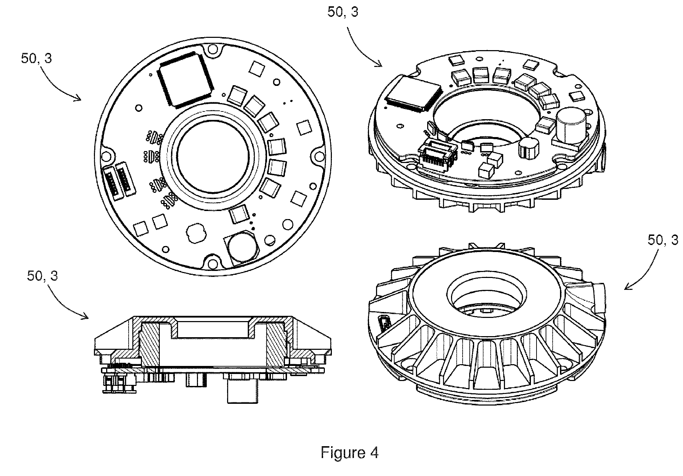

Figure 4 shows a top view, a cross section and two perspective views of a part of the joint unit 40 according to the invention: The part shown is the back of the housing 1, comprising the stator 50 of the rotary drive 2, namely of the motor, and the control unit 3. As already mentioned, the back of the housing 1 employs cooling fins for increased convective heat dissipation, visible in the right hand side figures. The control unit 3 is smoothly integrated into the stator.

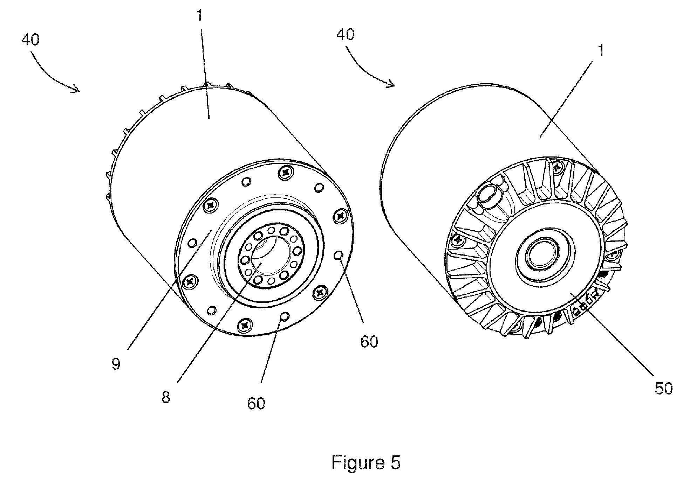

Figure 5 shows two perspective views of a joint unit 40 according to the invention. The compact and integrated design of the joint unit 40 becomes visible in this representation. All functional units are encapsulated in the housing 1. The joint output 8 is realized as hollow axle. On the front of the housing 1, the connection element 9 is arranged. It comprises holes 60 for a connection to a linking member or a separate functional unit. The back of the housing 1, comprising the stator 50 of the rotary drive 2, is equipped with cooling fins, as described.

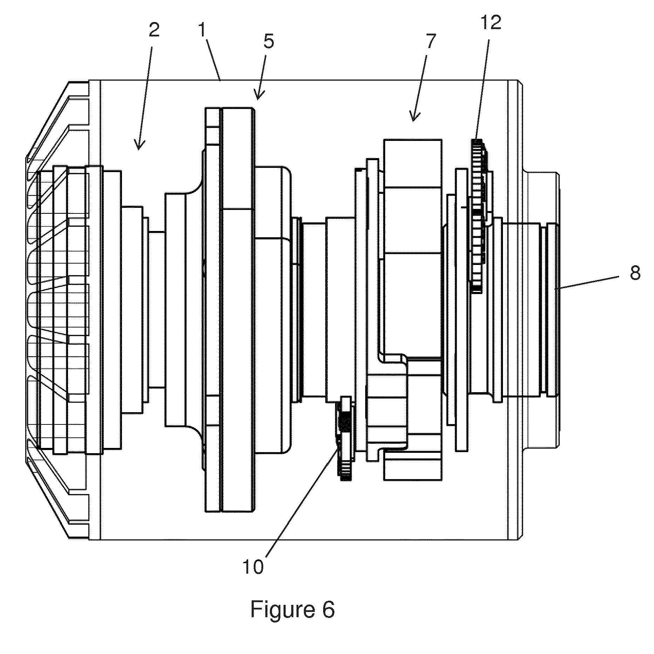

Figure 6 shows a side view of a joint unit 40 according to the invention. The housing 1 is displayed transparently for a better visibility of the functional units. The rotary drive 2 is mechanically coupled to the gear 5, which comprises a gear output angle sensing device 100, of which the reading head 10 is shown. The gear 5 is further mechanically coupled to the spring element 7, which is connected to the joint output 8. The joint output 8 comprises a joint output angle sensing device 110, of which, similarly, the reading head 12 is shown.

### List of reference signs

- 1: housing
- 2: rotary drive
- 3: control unit
- 4: motor-gear transmission shaft
- 5: gear
- 6: gear-spring transmission shaft
- 7: spring element
- 8: joint output
- 9: connection element
- 10: gear output angle sensing device - reading head
- 11: gear output angle sensing device - magnetic ring
- 12: joint output angle sensing device - reading head
- 13: joint output angle sensing device - magnetic ring
- 20-25: bearings
- 30-34: sealing rings
- 40: joint unit
- 50: stator of the rotary drive
- 51: rotor of the rotary drive
- 60: holes
- 70: first strip
- 71: second strip
- 72: inner connection area
- 73: outer connection area
- 100: gear output angle sensing device
- 110: joint output angle sensing device

## Claims

1. Joint unit (40), in particular joint unit (40) of a robot, comprising in series connection:
- a rotary drive (2),
- a gear (5) for transformation of the torque provided by the rotary drive (2), wherein the gear (5) comprises a gear input and a gear output, wherein the gear input is mechanically coupled to the rotary drive (2),
- at least one spring element (7) for at least partial storing of the torque provided by the gear output and/or of the torque provided by an external load applied to the joint unit (40), wherein the spring element (7) is mechanically coupled to the gear output, and
- a joint output (8) which is mechanically coupled to the spring element (7) for transmitting the torque realized by the rotary drive (2) and/or stored by the spring element (7).

2. Joint unit (40) according to claim 1, wherein the gear (5) is a strain wave gear.

3. Joint unit (40) according to at least one of the claims 1 and 2, wherein the joint output (8) is realized as an axle, preferably a hollow axle.

4. Joint unit (40) according to at least one of the claims 1 to 3, wherein the rotary drive (2) comprises a stator (50) and the joint unit (40) comprises a connecting member provided on the stator (50).

5. Joint unit (40) according to at least one of the claims 1 to 4, wherein the spring element (7) is a spiral spring.

6. Joint unit (40) according to claim 5, wherein the spiral spring comprises at least two wound strips (70, 71), particularly concentrically, each comprising three sections along the longitudinal direction of the respective strip, wherein a middle section provided between a center section arranged in the center part and a distal section arranged at a distal end has a cross section which is bigger than the cross sections of the center section and the distal section.

7. Joint unit (40) according to at least one of the claims 1 to 6, comprising a joint output angle sensing device (110).

8. Joint unit (40) according to at least one of the claims 1 to 7, wherein the rotary drive (2) comprises a rotor (51) and a position sensing device adapted to sense the angular position of the rotor (51).

9. Joint unit (40) according to at least one of the claims 1 to 8, comprising a gear output angle sensing device (100).

10. Joint unit (40) according to at least one of the claims 1 to 9, comprising a slip ring for the transmission of electrical signals and/or power between members of the joint unit that are movable with respect to each other.

11. Joint system, comprising at least two joint units (40) as claimed in at least one of the claims 1 to 10, wherein the joint units (40) are mechanically connected in series.

12. Robot for manipulation and/or transportation, in particular for transportation of an object, comprising at least one joint unit (40) as claimed in at least one of the claims 1 to 10 or at least one joint system as claimed in claim 11.

13. Robot for manipulation and/or transportation according to claim 12, wherein the robot is a driving robot and comprises at least one wheel, and at least one joint unit (40) or at least one joint system is connected or connectable to the wheel in order to drive the wheel.

14. Robotic exoskeleton system, comprising a joint unit (40) as claimed in at least one of the claims 1 to 10 or the joint system as claimed in claim 11 and two fixing devices for the fixation on body parts of mammals, particularly humans, wherein the first fixing device is mechanically connected or connectable to the stator (50) of the rotary drive (2) and the second fixing device is mechanically connected or connectable to the rotor (51) of the rotary drive (2).

15. Method for manipulation and/or transportation, in particular for transportation of an object, in particular for moving a body, wherein
- a joint unit (40) as claimed in at least one of the claims 1 to 10, a joint system as claimed in claim 11 or a robot as claimed in one of the claims 12 and 13 is provided,
- energy is supplied to the rotary drive (2),
- torque provided by the rotary drive (2) is transformed by the gear (5),
- the spring element (7) is loaded by the torque provided by the gear (5),
- torque provided by the spring element (7) is transmitted to the joint output (8),
- torque provided by the joint output (8) is applied to the object such that the object is manipulated and/or transported.
